# EUROPÄISCHE PATENTSCHRIFT

(11) **EP 3 042 210 B1**
(45) Veröffentlichungstag und Bekanntmachung des Hinweises auf die Patenterteilung: **04.10.2017**
(21) Anmeldenummer: 14758294.4
(22) Anmeldetag: 28.08.2014
(51) Int. Cl.: F03D 17/00, G01C 21/16, G01M 5/00, G01M 7/00, G01P 13/00, G01P 21/00

(54) **SYSTEM UND VERFAHREN ZUM ÜBERWACHEN VON BEWEGUNGEN UND SCHWINGUNGEN BEWEGTER STRUKTUREN**
SYSTEM AND METHOD FOR MONITORING MOVEMENTS AND VIBRATIONS OF MOVING STRUCTURES
SYSTÈME ET PROCÉDÉ DE SUPERVISION DE MOUVEMENTS ET DE VIBRATIONS DE STRUCTURES EN MOUVEMENT

(30) Priorität: 02.09.2013 DE 102013014622
(43) Veröffentlichungstag der Anmeldung: 13.07.2016
(73) Patentinhaber: Northrop Grumman LITEF GmbH, 79115 Freiburg (DE)
(72) Erfinder: KRINGS, Manfred, 79232 March (DE)
(74) Vertreter: Müller Hoffmann & Partner
(86) Internationale Anmeldenummer: PCT/EP2014/002345
(87) Internationale Veröffentlichungsnummer: WO 2015/028153

(56) Entgegenhaltungen:
- WO-A1-2012/049492
- WO-A1-2013/110215
- DE-A1-102006 005 258
- US-A1- 2009 326 851
- HAMEED Z ET AL: "Condition monitoring and fault detection of wind turbines and related algorithms: A review", RENEWABLE AND SUSTAINABLE ENERGY REVIEWS, ELSEVIERS SCIENCE, NEW YORK, NY, US, Bd. 13, Nr. 1, 2009, Seiten 1-39, XP025496619, ISSN: 1364-0321, DOI: 10.1016/J.RSER.2007.05.008 [gefunden am 2008-10-04]

## Beschreibung

Die Erfindung betrifft ein System und ein Verfahren zum Überwachen von Bewegungen einer Struktur.

Bewegliche Strukturen, wie beispielsweise Gebäude oder große Maschinen, können z.B. durch Umwelteinflüsse oder durch eigene Betriebsbewegungen in Bewegungen oder Schwingungen versetzt werden, die die Struktur schädigen oder den Betrieb behindern können. Um Schäden vorzubeugen, eine Wartung zu planen oder eine Restlebensdauer zu schätzen, können derartige Bewegungen beobachtet und überwacht werden.

Zum Überwachen von Windenergieanlagen werden bekannte Sensoren, wie beispielsweise einachsige Beschleunigungssensoren mit Piezo-Technologie, Dehnungsmessstreifen, Fotometriesysteme oder Laser-Messsysteme verwendet. Hierdurch können einfache Lageveränderungen und Frequenzanalysen des Körperschalls durchgeführt werden, die eine Erkennung möglicher Schäden an Teilen der Anlage, beispielsweise an Lagern, Getriebeteilen oder Rotorblättern, ermöglichen.

Nachteilig hieran ist, dass die gemessenen Werte eine Bewegung der Anlage nur einachsig und nur für ausgewählte Messstellen erfassen.

Die WO 2012/049492 A1 offenbart ein System zur Korrektur von inertialen Navigationsdaten zur Navigation. Das System verwendet Informationen über Gebäude und/oder andere Merkmale in der Umgebung, um eine Drift in der Ausgabe von Trägheitssensoren zu korrigieren. Insbesondere verwendet das System die vier Außenwände eines Gebäudes, um die wahrscheinliche Bewegungsrichtung eines Benutzers des Systems, der sich innerhalb des Gebäudes befindet, zu bestimmen. Diese Informationen werden verwendet, um die Drift zu korrigieren. Das System beinhaltet ein stochastisches Filter, insbesondere ein Kalman-Filter, um Trägheitsdaten zu verarbeiten und um Korrekturen an den Trägheitsnavigationsdaten vorzunehmen. Das Kalman-Filter ermöglicht auch die Integration von anderen Navigationsdaten, so wie etwa von GPS-Daten. Das System kann auch Informationen aus Luftbildern, wie etwa Karten und Photographischen Daten, mittels Algorithmen zur Kanten- und Geradenerkennung verwenden.

Die US 2009/326851 A1 offenbart eine Trägheitsmesseinheit mit einer Basis mit einer Mehrzahl von physisch getrennten Sektoren, auf denen jeweils drei Gruppen von orthogonal ausgerichteten Drehratensensoren angeordnet sind. Sowohl drei high-G orthogonal orientierte Beschleunigungssensoren als auch drei mit low-G orthogonal orientierten Beschleunigungssensoren sind ebenfalls auf der Basis angeordnet. Ein Prozessor auf der Basis enthält Software zum Empfangen von Signalen der drei Gruppen von Winkelgeschwindigkeitssensoren und der drei high-G und der drei low-G Beschleunigungssensoren. Die Software ist basierend auf den empfangenen Signalen auch zum Berechnen eines oder mehrerer aus den Folgenden geeignet: eine Änderung der Lage, eine Positionsänderung, eine Änderung in der Winkelgeschwindigkeit, eine Geschwindigkeitsänderung und eine Änderung in der Beschleunigung des Geräts über eine Vielzahl von endlichen Zeitinkrementen hinweg.

Die WO 2013/110215 A1 offenbart ein Verfahren zur Bestimmung der Parameter einer Windenergieanlage. Signale können von mindestens einer Mikro-Inertial-Messeinheit (Mimu) empfangen werden, die an oder innerhalb einer Komponente der Windturbine angebracht ist, und mindestens einen Parameter der Windenergieanlage kann auf Basis der von der mindestens einen Mimu übermittelten Signale bestimmt werden.

Die DE 10 2006 005 258 A1 offenbart ein Verfahren zur Ermittlung von Belastungen einer mechanischen Struktur und/oder von Schäden oder Zuständen der mechanischen Struktur, die aus den Belastungen der mechanischen Struktur resultieren. Dazu werden durch Belastungen/Schäden der mechanischen Struktur bewirkte Rotationen eines Teils der mechanischen Struktur über einen faseroptischen Rotationssensor, der mit dem Strukturteil mechanisch starr verbunden ist, gemessen und aus den gemessenen Rotationen auf die Belastungen/Schäden/Zustände der mechanischen Struktur geschlossen.

"Condition monitoring and fault detection of wind turbines and related algorithms: A review" by Z. Hameed et al. (Renewable and sustainable energy reviews, Elsevier Science, New York, Bd. 13, Nr. 1, S. 1-39) beschreibt verschiedene Techniken Windturbinen und deren Leistung zu überwachen.

Der Erfindung liegt die Aufgabe zugrunde, ein System und ein Verfahren zum Überwachen von Bewegungen einer Struktur anzugeben, die ein effektives und sicheres Überwachen der Struktur zulassen und eine Grundlage für Reparaturmaßnahmen, Wartungsplanungen und/oder Schätzungen der Restlebensdauer von Teilen der Struktur liefern.

Diese Aufgabe wird gelöst durch ein System nach Anspruch 1 zum Überwachen von Bewegungen einer Struktur und durch ein in einem nebengeordneten Anspruch angegebenes Verfahren zum Überwachen von Bewegungen einer Struktur. Weiterentwicklungen sind den abhängigen Ansprüchen zu entnehmen.

Ein System zum Überwachen von Bewegungen einer Struktur weist wenigstens eine an der Struktur befestigte inertiale Messvorrichtung zum Erfassen von Drehraten und Beschleunigungswerten im erdfesten Inertialsystem auf. Das System weist weiterhin eine Zentraleinheit zum Bestimmen eines

Überwachungswerts auf Basis der Drehraten und Beschleunigungswerte mittels eines Navigationsalgorithmus und eine Ausgabeeinheit zum Ausgeben des Überwachungswerts auf.

Die Struktur kann ein beliebiger Gegenstand sein, der durch äußere Einflüsse (Umwelteinflüsse) oder innere Einflüsse (Betriebsverhalten) in Bewegungen und/oder Schwingungen versetzt werden kann. Es kann sich beispielsweise um ein Gebäude, wie beispielsweise ein Hochhaus oder ein Sendemast handeln, oder um eine Maschine, wie beispielsweise eine Baumaschine, einen Kran oder dergleichen. Weiterhin kann es sich auch um Strukturen handeln, die nach Art eines Gebäudes errichtet sind und nach Art einer Maschine betrieben werden, wie beispielsweise ein Riesenrad, eine Bohrinsel oder eine Windenergieanlage.

Derartige Strukturen können einerseits durch Umwelteinflüsse in Bewegung versetzt werden, beispielsweise durch den Wind, die Meeresströmung, den Wellenaufschlag oder Bewegungen der Erdoberfläche z.B. bei einem Erdbeben. Andererseits können derartige Strukturen auch durch eigene Betriebsbewegungen in Bewegung versetzt werden, beispielsweise durch Arbeitsbewegungen eines Teils der Struktur, Antriebs- oder Getriebeschwingungen. Zudem können Wechselwirkungen zwischen Umwelteinflüssen und internen Bewegungen der Struktur bestehen, die zu einem komplexen Bewegungsverhalten führen.

Derartige Bewegungen und Schwingungen können die Struktur schädigen und zu Materialermüdung, beispielsweise Ermüdungsrissen oder -brüchen führen. Sie können weiterhin ein Betriebsverhalten der Struktur beeinflussen und dabei die Einsatzmöglichkeit oder Betriebseffizienz einschränken.

Weiterhin ist es auch möglich, dass die Struktur sich im zeitlichen Verlauf ändert, beispielsweise durch Alterung, Verschleiß, strukturelle Schäden, mechanische Schäden oder durch Umwelteinflüsse. Beispielsweise kann es bei komplexen bewegten Strukturen wie beispielsweise Windenergieanlagen zu Eisansatz an oder Wassereinlagerungen in den Rotorblättern kommen. Durch Belastungen und Materialermüdung können sich Materialeigenschaften ändern, Teile der Struktur können weicher werden oder Risse bekommen. Derartige Änderungen der Struktur schlagen sich im Bewegungsverhalten der Struktur nieder. Beispielsweise können sich dadurch Frequenzen oder Amplituden von Schwingungen bzw. Bewegungen verändern. Die Veränderungen können anhand der durch die inertiale Messvorrichtung gemessenen Drehraten und Beschleunigungswerte erkannt werden. Dies ermöglicht es, die Notwendigkeit von Maßnahmen beispielsweise zur Wartung, Instandhaltung oder zum Betrieb zu erkennen und derartige Maßnahmen umzusetzen, bevor es zu signifikanten Schäden kommt.

Eine Überwachung von Bewegungen der Struktur ist damit sowohl aus Gründen der Betriebssicherheit als auch der Betriebseffizienz geboten.

Zum Überwachen der Bewegungen können an der Struktur bzw. einem Teil der Struktur eine oder mehrere inertiale Messvorrichtungen befestigt werden, die es erlauben, die an den Befestigungsstellen auftretenden Drehraten und Beschleunigungswerte mit Bezug auf das erdfeste Inertialsystem zu erfassen. Hierzu können Systeme mit Inertialsensoren (Beschleunigungs- und Drehratensensoren) der Typen MEMS (mikroelektromechanische Systeme) und/oder FOG IMU (Inertialmesseinheiten mit Faserkreiseln) verwendet werden.

Die erfassten Beschleunigungswerte und Drehraten können an die Zentraleinheit übermittelt werden, beispielsweise über ein drahtloses oder kabelgebundenes Netzwerk zur uni- oder bidirektionalen Kommunikation.

In der Zentraleinheit können auf Basis der gemessenen Drehraten und Beschleunigungswerte mittels eines Navigationsalgorithmus, beispielsweise mittels fortlaufender Integration bzw. Summation der gemessenen Drehraten und Beschleunigungen, Geschwindigkeiten und Winkelgeschwindigkeiten sowie eine Orientierung und eine Position der inertialen Messvorrichtung im Raum bestimmt werden.

Hierbei können klassische Navigationsalgorithmen angewendet werden, wie sie beispielsweise aus dem Bereich der Fahrzeug-, Schiffs- und/oder Flugnavigation bekannt sind, z.B. mit einer Schuler-Kompensation der erfassten Drehraten und Beschleunigungen.

Auf Basis der gemessenen Drehraten und Beschleunigungswerte, der berechneten (Winkel-)Geschwindigkeiten, der Orientierung und/oder der Position können Bewegungen der Struktur erfasst und überwacht werden. Insbesondere können die an den Messstellen vorliegenden Bewegungen, Schwingungen und Auslenkungen bestimmt werden.

Weiterhin kann auf dieser Basis der Überwachungswert bestimmt werden. Der Überwachungswert kann beispielsweise die gemessene Drehrate, den gemessenen Beschleunigungswert, die berechnete (Winkel-)Geschwindigkeit, Orientierung und/oder Position umfassen, oder einen daraus ermittelten weiteren Wert wie beispielsweise eine Bewegungsfrequenz und/oder -amplitude, eine Torsion und/oder eine Auslenkung.

Der Überwachungswert kann durch drahtlose oder kabelgebundene Kommunikation an die Ausgabeeinheit übermittelt werden. Die Ausgabeeinheit kann im einfachsten Fall einen Bildschirm mit Ausgabe des Überwachungswerts bzw. seines Verlaufs umfassen, aber auch weitere Komponenten, wie beispielsweise einen Datenspeicher zum Sammeln und Dokumentieren des Verlaufs des Überwachungswerts über die Zeit. Alternativ oder zusätzlich kann die Ausgabeeinheit ein komplexes Warn- und Alarmsystem aufweisen.

Zudem ist es möglich, die Ausgabeeinheit nach Art eines Regelsystems mit Aktoren der Struktur zu koppeln. In diesem Fall können in Abhängigkeit vom Überwachungswert Steuerungsinformationen, beispielsweise Stellgrößen, an die Aktoren übermittelt werden. Im Fall der Überwachung einer Windenergieanlage ist es beispielsweise möglich, in Abhängigkeit von einem Überwachungswert, der Rückschlüsse auf eine Durchbiegung der Rotorblätter zulässt, eine Stellung der Rotorblätter zu regeln, um eine übermäßige Belastung der Rotorblätter zu vermeiden.

Auf Basis des Überwachungswerts sowie weiterer Überwachungsinformationen ist es möglich, Rückschlüsse auf Bewegungen und Schwingungen der Struktur und damit beispielsweise Rückschlüsse auf mögliche Fehlfunktionen, Ermüdungen oder Schäden zu ziehen. Dies ermöglicht beispielsweise eine Schätzung der Restlebensdauer der Struktur bzw. ihrer Komponenten und kann als Grundlage für die Wartungsplanung verwendet werden. Derartige Schätzungen sind insbesondere beim Überwachen von Strukturen mit schwerer Zugänglichkeit (z.B. Offshore-Windenergieanlagen) und bei Maschinen mit hoher Auslastung (Pressen eines Großpresswerks) hilfreich, bei denen jeder Wartungseinsatz mit hohen Kosten verbunden ist. Weiterhin sind derartige Kennwerte von Bedeutung im Hinblick auf Sicherheitsanforderungen, da die kontinuierliche Überwachung regelmäßig dokumentiert und Wartungsbedarf unverzüglich angezeigt wird.

In einer Ausführungsform weist die inertiale Messvorrichtung drei Drehratensensoren mit jeweils voneinander linear unabhängigen und/oder zueinander orthogonalen Erfassungsachsen sowie drei Beschleunigungssensoren mit jeweils voneinander linear unabhängigen und/oder zueinander orthogonalen Erfassungsrichtungen auf.

Beispielsweise können die Drehratensensoren drei zueinander orthogonale Erfassungsachsen x, y und z aufweisen, die den Erfassungsrichtungen der Beschleunigungssensoren entsprechen. Mit Hilfe der Drehratensensoren (der gyroskopischen Sensoren) kann die Rotationsbewegung berechnet werden, während mit Hilfe der Beschleunigungssensoren (der Translationssensoren) die translatorische Bewegung berechnet werden kann. Folglich können beliebige Bewegungen der inertialen Messvorrichtung gemäß den sechs Freiheitsgraden bestimmt werden.

In einer Ausführungsform ist die Zentraleinheit dazu ausgelegt, einen Messfehler der inertialen Messvorrichtung auf Basis einer durch die Struktur vorgegebenen Randbedingung zu bestimmen und/oder zu korrigieren.

Insbesondere unterliegt die klassische inertiale Navigation, ausgehend von einer vorgegebenen Anfangsposition, einem kontinuierlichen Anwachsen des Orientierungs- bzw. Positionsfehlers, der sich durch das "Auf-Integrieren" bzw. Aufsummieren etwaiger Fehler oder Messungenauigkeiten (z.B. Nullpunktfehler) der Inertialsensoren (Drehraten- und Beschleunigungssensoren) ergibt. Dieses Anwachsen wird als Drift bezeichnet.

Um ein Driften der Position und Lage und damit auch des Überwachungswerts zu beschränken oder zu kompensieren, können bei der Anwendung des Navigationsalgorithmus stabile Voraussetzungen und Bedingungen, die an der Struktur vorliegen, berücksichtigt werden. Diese Bedingungen können beispielsweise in Form von Randbedingungen der Navigation aufgenommen werden. Folglich kann der Navigationsalgorithmus durch diese Voraussetzungen und Bedingungen gestützt werden. Ein Fehler im Berechnungsergebnis bzw. ein Fehler des Überwachungswerts kann auf dieser Basis abgeschätzt und/oder kompensiert werden.

Das Berücksichtigen von Randbedingungen kann im einfachsten Fall einen Vergleich der Randbedingung (z.B. einer bekannten geographischen Lage der Struktur) mit berechneten Werten (Geschwindigkeit, Winkelgeschwindigkeit, Position und Orientierung) umfassen. Auf dieser Basis kann der Fehler (z.B. Nullpunktfehler) der inertialen Messvorrichtung (Drehraten- und Beschleunigungssensoren) geschätzt und die Genauigkeit der Messung kontinuierlich verbessert werden. Die Berücksichtigung von beispielsweise mehreren oder komplexen Randbedingungen kann mittels eines Kalman-Filters im Navigationsalgorithmus realisiert werden.

In einer weiteren Ausführungsform kann die Zentraleinheit dazu ausgelegt sein, die Randbedingungen zu bestimmen, und zwar auf Basis wenigstens einer Information aus einer Gruppe umfassend eine im Wesentlichen stationäre Position der Struktur, eine auf Basis eines satellitengestützten Positionssignals bestimmte Position wenigstens eines Teils der Struktur, eine Einschränkung eines Freiheitsgrades einer Bewegung wenigstens eines Teils der Struktur, einen Neigungswinkel wenigstens eines Teils der Struktur, einen (beispielsweise vorgegebenen oder aus Messwerten oder berechneten Werten ableitbaren) Mittelwert einer Bewegung wenigstens eines Teils der Struktur und/oder der inertialen Messvorrichtung, und einer auf die Struktur einwirkenden Windgeschwindigkeit, Windrichtung, Strömungsgeschwindigkeit, Strömungsrichtung und/oder Wellenaufschlagrichtung.

Folglich können die Gegebenheiten der Struktur und ihre Anordnung in der Umwelt sowie jegliches Wissen über Umweltbedingungen dazu verwendet werden, den Navigationsalgorithmus zu stützen bzw. die Positions- und Lagedrift abzuschätzen bzw. zu korrigieren.

Derartige Randbedingungen sind aus der klassischen Fahrzeugnavigation nicht bekannt, da sie an Fahrzeugen im Allgemeinen nicht vorliegen. Sie werden im Rahmen der klassischen Fahrzeugnavigation daher nicht zur Fehlerkorrektur bzw. Driftvermeidung verwendet. Bei der Überwachung bewegter Strukturen, die beispielsweise ortsfest angeordnet sein können, können derartige Bedingungen jedoch vorliegen und zur Fehlerkorrektur genutzt werden.

Eine durch die Randbedingungen verbesserte Fehlerabschätzung und Fehlerkorrektur ermöglicht es, die bestimmten Werte mit einer höheren Genauigkeit anzugeben bzw. zu berechnen, oder alternativ preisgünstigere, eher driftanfällige inertiale Messvorrichtungen zu verwenden, da die auftretenden Fehler schätz- und korrigierbar sind.

Insbesondere sind Gebäude und/oder Großanlagen wie beispielsweise Windkraftanlagen und Bohrinseln dergleichen häufig stationär, also an einen festen Punkt im erdfesten Inertialsystem aufgestellt. Für diese Anlagen ist ein Stützen des Navigationsalgorithmus durch die Randbedingungen möglich.

Ein entsprechendes Stützen ist auch bei nicht ortsfesten Strukturen möglich, wenn ein Positionssignal genutzt werden kann, um die Position der Struktur zu bestimmen. Beispielsweise kann ein Empfänger eines globalen Navigationssatellitensystems (GNSS) verwendet werden, um ein satellitengestütztes Signal zur Positionsbestimmung zu empfangen und auszuwerten, z.B. ein GPS-, GLONASS-, Compass- oder Galileo-Empfänger. Alternativ kann auch ein anderes, beispielsweise lokales optisches Positionssignal zur Positionsbestimmung verwendet werden, oder ein optisches Erkennungsverfahren, das ein von einer Kamera erfasstes Bild analysiert. Die so bestimmte Position kann genutzt werden, um eine Drift der Sensoren, einen Fehler der berechneten Positions- und Orientierungswerte oder einen systematischen Fehler des Überwachungswerts zu erkennen und zu korrigieren.

Die Randbedingung kann auch durch eine Einschränkung eines Freiheitsgrads einer Bewegung wenigstens eines Teils der Struktur vorgegeben sein. Beispielsweise wird sich bei einer Drehung und/oder Schwingung eines Rotorblatts eine Position längs des Rotorblatts und damit beispielsweise ein Abstand eines Punktes zur Nabe kaum verändern. Folglich unterliegen Bewegungen dieses Punktes durch die Fixierung des Rotorblatts an der Nabe einer Einschränkung des Freiheitsgrads. Diese Einschränkung kann als Randbedingung verwendet werden, um beispielsweise einen systematischen Messfehler der Sensoren zu erkennen bzw. zu korrigieren.

Weiterhin kann als Randbedingung auch ein Neigungswinkel wenigstens eines Teils der Struktur bestimmt werden. Beispielsweise kann eine Neigung eines Turms einer Windenergieanlage zur Verschiebung der Position einer in einer Gondel der Windenergieanlage angeordneten inertialen Messvorrichtung führen. Wird zum Stützen des Navigationsalgorithmus lediglich die bekannte stationäre Position der Struktur erfasst, so wird die translatorische Bewegung der inertialen Messvorrichtung gegebenenfalls als Positionsdrift ausgelegt und eine möglicherweise kritische Neigung des Turms nicht erkannt. Unter Berücksichtigung des Neigungswinkels können Positionsdrift und Neigung jedoch erkannt und gesondert überwacht bzw. korrigiert werden.

Weiterhin kann die Randbedingung auf Basis eines Mittelwerts einer Bewegung wenigstens eines Teils der Struktur und/oder der inertialen Messvorrichtung bestimmt werden. Beispielsweise ist es möglich, dass der Teil der Struktur, an dem die inertiale Messvorrichtung befestigt ist, z.B. durch Windlast oder Wellenaufschlag in Schwingungen versetzt ist. Die Schwingungen verändern die Position der interialen Messvorrichtung und werden als Beschleunigung erkannt. Um dennoch einen Nullpunktfehler bzw. eine systematische Drift der inertialen Messvorrichtung erkennen zu können, kann ein Mittelwert der Bewegung über einen vorgegebenen Zeitabschnitt festgelegt werden und als Randbedingung zur Bestimmung und Korrektur des Messfehlers, beispielsweise auf Basis eines Kalman-Filters, verwenden werden.

Weiterhin kann die Randbedingung auch auf Basis eines auf die Struktur einwirkenden Umgebungseinflusses bestimmt werden. Insbesondere können Umwelteinflüsse wie beispielsweise eine Windgeschwindigkeit, eine Windrichtung, eine Strömungsgeschwindigkeit, eine Strömungsrichtung und/oder eine Wellenaufschlagrichtung beispielsweise bei Offshore-Windenergieanlagen oder Bohrinseln zu Bewegungen und/oder Schwingungen der Windenergieanlage oder Bohrinsel führen, die durch die daran befestigte inertiale Messvorrichtung gemessen werden. Derartige Umgebungseinflüsse wirken daher auf die Positions- und Orientierungsbestimmung der Struktur ein und können mit einem Nullpunktfehler, also einer systematischen Drift der inertialen Messvorrichtung verwechselt werden. Wird im Rahmen der Fehlerkorrektur jedoch die auf Basis der Umgebungseinflüsse bestimmte Randbedingung berücksichtigt, ist eine Fehlerkorrektur ebenso möglich wie ein Erkennen der Verschiebung der Position bzw. Orientierung der inertialen Messvorrichtung.

In einer weiteren Ausführungsform weist das System mehrere an der Struktur befestigte inertiale Messvorrichtungen auf, wobei die Zentraleinheit dazu ausgelegt ist, den Überwachungswert auf Basis einer Relativbewegung zwischen jeweils zwei der mehreren inertialen Messvorrichtungen zu bestimmen.

Durch die Verwendung mehrerer inertialer Messvorrichtungen ist es möglich, Bewegungen bzw. Schwingungen der Struktur an mehreren Messpunkten (Befestigungsorten der Inertialsensoren) zu messen. Hierdurch ist eine genaue Erfassung von Relativbewegungen innerhalb der Struktur möglich, die Rückschlüsse auf Auslenkungen, Torsionen und/oder Durchbiegungen zwischen den Messpunkten zulässt. Derartige Bewegungen haben direkten Einfluss auf das Material und liefern somit wichtige Informationen zur Überwachung, zur Bestimmung von Wartungsintervallen und/oder zur Lebensdauerschätzung.

In einer Variante kann die Struktur mehrere miteinander gekoppelte Komponenten umfassen, wobei an wenigstens zwei der Komponenten jeweils eine inertiale Messvorrichtung angeordnet ist.

Die Anordnung der inertialen Messvorrichtungen an mehreren Komponenten ermöglicht es, relative Bewegungen der Komponenten zueinander zu überwachen, wodurch die Bewegung der Komponenten zueinander und damit beispielsweise eine Belastung der Kopplungsvorrichtungen zwischen den Komponenten erfassbar wird.

Mehrere inertiale Messvorrichtungen können beispielsweise verwendet werden, um eine Windenergieanlage mit einem Turm, einer auf dem Turm angeordneten Gondel und einem an der Gondel angeordneten Rotor mit Rotorblättern zum Antreiben eines Generators zu überwachen.

Bei der Verwendung mehrerer an einem Rotorblatt angeordneter inertialer Messvorrichtungen kann beispielsweise eine Durchbiegung des Rotorblatts erkannt werden. Auf dieser Basis kann eine Warnmeldung erzeugt und/oder eine Stellung des Rotorblatts im Wind aktiv geregelt werden. So ist es möglich, Schäden zu erkennen und/oder zu vermeiden.

Weiterhin kann eine Orientierung der an der Gondel befestigten inertialen Messvorrichtung bezüglich der am Turm befestigten inertialen Messvorrichtung bestimmt werden. Auf dieser Basis kann beispielsweise unter Berücksichtigung einer erfassten Windrichtung die Gondelausrichtung bewertet bzw. korrigiert werden.

Die Verwendung von mehreren inertialen Messvorrichtungen an der Struktur bzw. an verschiedenen Teilen der Struktur ermöglicht es folglich, Bewegungen der Struktur in höheren Moden zu erfassen und zu bewerten und die Struktur effektiv zu überwachen.

In einer weiteren Variante ist die Struktur eine Windenergieanlage, und die inertiale Messvorrichtung ist an einem Rotorblatt der Windenergieanlage angeordnet. Dabei kann die inertiale Messvorrichtung derart angeordnet sein, dass eine Tangente eines Rotationspfads der inertialen Messvorrichtung zu keiner der Erfassungsrichtungen der Drehratensensoren senkrecht und/oder parallel ist (schiefachsige / schiefwinklige Montage). Zusätzlich oder alternativ kann die Zentraleinheit dazu ausgelegt sein, die Randbedingung zu bestimmen auf Basis wenigstens einer Information aus der Gruppe umfassend: die zyklisch mit einer Umdrehung des Rotors auf die inertiale Messvorrichtung einwirkende Erdbeschleunigung, die zyklisch mit einer Umdrehung des Rotors auf die inertiale Messvorrichtung einwirkende Erdrotation und ein Ausgangssignal eines Drehpulsgebers des Rotors.

Die schiefwinklige Montage der Sensoren am Rotorblatt stellt sicher, dass die Erfassungsachsen bzw. -richtungen nicht kollinear zu einer Rotationstangente des Rotorblatts angeordnet sind. Folglich werden alle Messachsen bei einer Umdrehung des Rotorblatts gleichermaßen der Beschleunigung bzw. Rotation ausgesetzt.

Durch die Anordnung der inertialen Messvorrichtung am Rotorblatt wird die inertiale Messvorrichtung beim Betrieb der Windenergieanlage mit dem Rotorblatt in Rotation versetzt. Hierbei wirkt die Erdbeschleunigung von +/-1g zyklisch mit der Umdrehung des Rotors auf die inertiale Messvorrichtung ein. Ebenso wirkt auch die Erdrotation zyklisch mit der Umdrehung des Rotors auf die inertiale Messvorrichtung ein. Diese Einwirkungen spiegeln sich in den von der inertialen Messvorrichtung erfassten Beschleunigungen und Drehraten und damit im Ausgangssignal der inertialen Messvorrichtung wieder.

Die zyklisch mit der Rotorumdrehung wirkende Erdbeschleunigung und -rotation überlagert das Ausgangssignal und kann im Ausgangssignal erkannt und kompensiert werden. Sie kann insbesondere als Randbedingung der oben beschriebenen Fehlerkorrektur verwendet werden. Hierdurch ist es möglich, systematische Fehler der inertialen Messvorrichtung zu erkennen, abzuschätzen bzw. zu kompensieren, insbesondere einen Kreiselskalenfaktorfehler der inertialen Messvorrichtung. Dadurch kann ein Anwachsen der Fehler durch den Kreiselskalenfaktorfehler verhindert werden.

Eine derartige Fehlerkorrektur kann insbesondere auch beim Kalibrieren der Sensoren verwendet werden. Die schiefachsige Montage der inertialen Messvorrichtung am Rotorblatt ermöglicht es, alle Messachsen bzw. die zugehörigen Sensoren in dieser Weise zu kalibrieren.

Alternativ oder zusätzlich kann auch das Ausgangssignal eines Drehpulsgebers des Rotors verwendet werden, um die Umdrehung des Rotors zu erfassen und auf dieser Basis die Einwirkung der Erdbeschleunigung bzw. Erdrotation auf das Messergebnis zu bewerten und die inertiale Messvorrichtung zu kalibrieren.

In einer weiteren Ausführungsform ist die Struktur ebenfalls eine Windanlage. Die inertiale Messvorrichtung ist an einer Gondel der Windanlage angeordnet. Weiterhin ist die Zentraleinheit dazu ausgelegt, die Randbedingung auf Basis eines Drehwinkelgebers der Gondel zu bestimmen.

Beispielsweise kann der Drehwinkelgeber an der Koppelstelle vom Turm zur Gondel verbaut sein. Das Ausgangssignal des Drehwinkelgebers kann mit einem Ausgangssignal der inertialen Messvorrichtung verglichen und als Randbedingung zur Fehlerabschätzung bzw. Kalibration der inertialen Messvorrichtung genutzt werden. Hierdurch kann ein Kreiselskalenfaktor der inertialen Messvorrichtung erkannt bzw. korrigiert werden. Anschließend kann eine Ausrichtung der Gondel in Azimutrichtung erfasst und beispielweise im Hinblick auf eine Windrichtung angepasst werden. Dies ermöglicht eine optimale Nutzung der Windenergie.

In einer weiteren Ausführungsform ist die Zentraleinheit dazu ausgelegt, den Überwachungswert zu bestimmen auf Basis wenigstens einer Information aus der Gruppe umfassend: einen Ausgabewert eines Rechenmodells der Struktur, eine Statusinformation der Struktur, einen Umweltparameter, eine Drehrate, eine Beschleunigung, eine Winkelgeschwindigkeit, eine Geschwindigkeit, eine Orientierung und/oder eine Position an einem von einem Einbauort der inertialen Messvorrichtung verschiedenen Punkt der Struktur, eine Bewegungsamplitude und/oder eine Bewegungsfrequenz einer Schwingung der Struktur und eine Torsion zwischen zwei verschiedenen Punkten der Struktur.

Insbesondere ist es möglich, die von der inertialen Messvorrichtung bzw. die von der inertialen Messvorrichtungen gemessenen Beschleunigungs- und Drehratenwerte beispielsweise in ein beispielsweise auf Basis finiter Elemente erstelltes, die körperlichen Gegebenheiten der Struktur abbildendes Rechenmodell, das in einem Speicher abgelegt sein kann, einzuspeisen. Beispielsweise kann die Zentraleinheit die Messwerte durch Zugriff auf den Speicher einspeisen und auf Basis der Messwerte ein dynamisches Verhalten der Struktur sukzessive berechnen. Hierdurch wird das Rechenmodell stimuliert und das dynamische Verhalten (Bewegungen, Schwingungen) der Struktur simuliert.

Alternativ oder zusätzlich können Statusinformationen der Struktur, wie beispielsweise ein Betriebsparameter wie eine Getriebeeinstellung und/oder eine erzeugte Energie einer Windenergieanlage, bei der Bestimmung des Überwachungswerts genutzt werden. Auch diese Informationen können in das Rechenmodell der Struktur eingespeist werden, bzw. mit dem simulierten dynamischen Verhalten des Rechenmodells verglichen werden. Sie können so einerseits zum Stimulieren, andererseits zum Validieren des Rechenmodells verwendet werden.

Als Umgebungsparameter zur Bestimmung des Überwachungswerts können beispielsweise (satellitengestützte) Positionssignale bezüglich der Position wenigstens eines Teils der Struktur, eine Gondelausrichtung, ein Drehwinkel des Rotors, ein Pitch der Rotorblätter, eine Windrichtung und Windstärke, eine Wellenrichtung und Wellenstärke, eine Strömung, eine Temperatur und eine Leistungsabgabe beispielsweise einer Windenergieanlage betrachtet werden. Beispielsweise kann eine Information bezüglich einer gemessenen Windrichtung genutzt werden, um eine Ausrichtung der Gondel in Azimutrichtung zu bewerten bzw. zu korrigieren.

Weiterhin kann die Zentraleinheit dazu ausgelegt sein, Bewegungen an einem vom Einbauort der inertialen Messvorrichtung verschiedenen Punkt der Struktur zu bestimmen. Dies kann erreicht werden durch Einspeisen von dreidimensionalen Drehraten und Beschleunigungen in das Rechenmodell, wobei die Drehraten und Beschleunigungen von einer oder mehreren inertialen Messvorrichtung(en) mit anderen, von dem Punkt verschiedene Einbauorten gemessen wurden. Auf dieser Basis können Bewegungen auch an weiteren Punkten der Struktur berechnet werden. Beispielsweise können Torsionen zwischen zwei verschiedenen Punkten der Struktur, z.B. zwischen zwei verschiedenen Punkten eines Rotorblatts oder Turms, und damit mechanische Belastungen der Struktur erfasst werden. So können Bewegungen mit höheren Moden bestimmt bzw. berechnet werden. Dies ermöglicht eine effektive Modellierung und Überwachung von Bewegungen und Schwingungen der Gesamtstruktur.

Weiter kann der Überwachungswert auf Basis einer Bewegungsamplitude und/oder einer Bewegungsfrequenz einer Schwingung der Struktur bestimmt werden. Insbesondere können aufgrund der gemessenen, beispielsweise dreidimensionalen Beschleunigungswerte Schwingungen der Struktur bzw. ihrer Teile und damit der Körperschall der Struktur erfasst werden. Dies ermöglicht ein Erkennen von mechanischen Schäden an der Struktur, beispielsweise am Antriebsstrang einer Windenergieanlage (z.B. Brüche und Verschleiß am Getriebe, an den Zähnen und/oder in den Lagern, die zu einer Veränderung des Körperschalls führen).

Mit Hilfe einer Körperschallanalyse auf Basis von an den Rotorblättern angeordneten inertialen Messvorrichtungen können beispielsweise Eisansatz und Risse an den Rotorblättern erkannt und entsprechende Wartungsmaßnahmen eingeleitet werden.

In einer weiteren Variante kann die Zentraleinheit dazu ausgelegt sein, Grenzwerte des Überwachungswerts zu erfassen und bei Überschreiten wenigstens eines der Grenzwerte eine Information an die Ausgabeeinheit zu senden. Sie kann weiterhin dazu ausgelegt sein, auf Basis des Überwachungswerts einen Vorschlag für Stellgrößen zum Einstellen von Aktoren an der Struktur an die Ausgabeeinheit zu senden. Alternativ oder zusätzlich kann die Zentraleinheit dazu ausgelegt sein, auf Basis des Überwachungswerts die Stellgrößen an die Aktoren zu senden.

Diese Variante ermöglicht eine Bandbreite von Überwachungsmöglichkeiten, von einer Grenzwertüberwachung und -überschreitungsmeldung über die Ermittlung von Steuerungsvorschlägen bis hin zu einer aktiven Regelung des dynamischen Verhaltens der Struktur.

So können drohende Schäden erkannt und gemeldet werden. Im Rahmen der Wartung von Windenergieanlagen ermöglicht das Erkennen und Melden von Eiseinsatz, von Unwuchten des Rotors bzw. von Getriebeschäden einen sicheren Betrieb und eine Erkennung von Regelungs- und Wartungsbedarf.

Weiterhin kann das Wartungspersonal durch die Ausgaben an der Ausgabeeinheit unterstützt werden, beispielsweise indem Vorschläge zur Regelung der Windenergieanlage erzeugt werden. Beispielsweise kann eine Änderung der Stellung der Rotorblätter oder eine Änderung einer Getriebeeinstellung vorgeschlagen werden. Hierdurch können Schäden vermieden und eine bessere Auslastung erreicht werden.

Zudem kann die Zentraleinheit neben der Ausgabe des Überwachungswerts Stellgrößen an die Aktoren der Struktur übermitteln. Dies ermöglicht es, auf einen anhand des Überwachungswerts erkannten kritischen Zustand schnell zu reagieren und beispielsweise nach einem Getriebeschaden die Rotorblätter schnell und aktiv aus dem Wind zu drehen. Weiterhin kann so eine bedarfsgerechte und gleichzeitig materialschonende Steuerung der Leistungsabgabe realisiert werden.

In Abhängigkeit von einem Kritikalitätsniveau des bestimmten Überwachungswerts kann die Übermittlung der Stellgrößen an die Aktoren beispielsweise von einer menschlichen Bestätigung durch das Wartungspersonal abhängig gemacht werden.

Ein Verfahren zum Überwachen von Bewegungen einer Struktur weist das Erfassen von Drehraten und Beschleunigungswerten im erdfesten Inertialsystem von wenigstens einer an der Struktur befestigten inertialen Messvorrichtung, das Bestimmen eines Überwachungswerts auf Basis der Drehraten und Beschleunigungswerte mittels eines Navigationsalgorithmus, und ein Ausgeben des Überwachungswerts auf.

Das Verfahren kann beispielsweise in jeder beliebigen Ausführungsform des vorstehend beschriebenen Systems ausgeführt werden.

In einer Variante kann das Verfahren ein Einspeisen der Drehraten und Beschleunigungswerte in das Rechenmodell der Struktur, ein Validieren des Rechenmodells anhand eines Vergleichs des Verlaufs der gemessenen Drehraten und Beschleunigungswerte jeweils mit in dem Modell berechneten Drehraten und Beschleunigungswerten und ein Bestimmen des Überwachungswerts auf Basis des Rechenmodells aufweisen.

Dieses Verfahren ermöglicht es, das Rechenmodell beispielsweise durch die Messwerte zu stimulieren und auf Basis der Stimulation das dynamische Verhalten des Modells zu berechnen, beispielsweise schrittweise über einen vorbestimmten Zeitraum hinweg. Parallel dazu können über den entsprechenden Zeitraum hinweg entsprechend Messwerte der Beschleunigungs- und Drehratensensoren der inertialen Messvorrichtung(en) erfasst werden. Durch einen Vergleich der erfassten und der berechneten Drehraten, bzw. der auf dieser Basis berechneten bzw. berechenbaren Winkelgeschwindigkeit, Geschwindigkeit, Orientierung bzw. Position kann das Rechenmodell validiert werden.

Beispielsweise kann das Rechenmodell als geeignet betrachtet werden, wenn Abweichungen nur unterhalb eines vorbestimmten Grenzwerts vorliegen. Andernfalls kann ein Bedarf für eine Anpassung des Rechenmodells bzw. des Berechnungsverfahrens erkannt werden. Auf Basis des validierten Rechenmodells kann der Überwachungswert bestimmt und ausgegeben werden.

In einer weiteren Variante des Verfahrens kann die Struktur wenigstens einen Teil einer Windenergieanlage mit einem Rotor mit Rotorblättern aufweisen, wobei die inertiale Messvorrichtung an einem der Rotorblätter angeordnet ist. Das Verfahren kann ein Kalibrieren der inertialen Messvorrichtung auf Basis einer zyklisch mit einer Umdrehung des Rotors auf die inertiale Messvorrichtung einwirkenden Erdbeschleunigung, auf Basis einer zyklisch mit einer Umdrehung des Rotors auf die inertiale Messvorrichtung einwirkenden Erdrotation und/oder auf Basis eines Drehpulsgebers des Rotors (in der vorstehend beschriebenen Weise) umfassen.

Bei der schiefwinkligen Montage der inertialen Messvorrichtung(en) an einem der Rotorblätter können im Rahmen einer Kalibration der Nullpunktfehler und der Kreiselskalenfaktor der inertialen Messvorrichtung geschätzt und korrigiert werden. Dieses Verfahren kann insbesondere bei einer Inbetriebnahme der Windenergieanlage hilfreich sein.

In einer weiteren Variante umfasst die Struktur wenigstens einen Teil einer Windenergieanlage mit einem Rotor mit Rotorblättern, wobei die inertiale Messvorrichtung an dem Rotor angeordnet ist. Das Verfahren weist ein Erkennen einer Unwucht des Rotors auf Basis der erfassten Drehraten und Beschleunigungswerte auf.

Dieses Verfahren kann insbesondere beim Auswuchten des Rotors verwendet werden. Unwuchten können erkannt und korrigiert werden, wodurch ein effektiver und ermüdungsfreier Betrieb der Windenergieanlage möglich wird.

Diese und weitere Merkmale der Erfindung werden nachfolgend anhand von Beispielen unter Zuhilfenahme der begleitenden Figuren näher erläutert. Es zeigen:
- **Fig. 1**: ein System zur Überwachung einer Windenergieanlage auf Basis von Messergebnissen mehrerer inertialer Messvorrichtungen unter Nutzung eines Navigationsalgorithmus, und
- **Fig. 2**: ein Blockdiagramm eines Systems zur Überwachung einer Windenergieanlage auf Basis eines Rechenmodells.

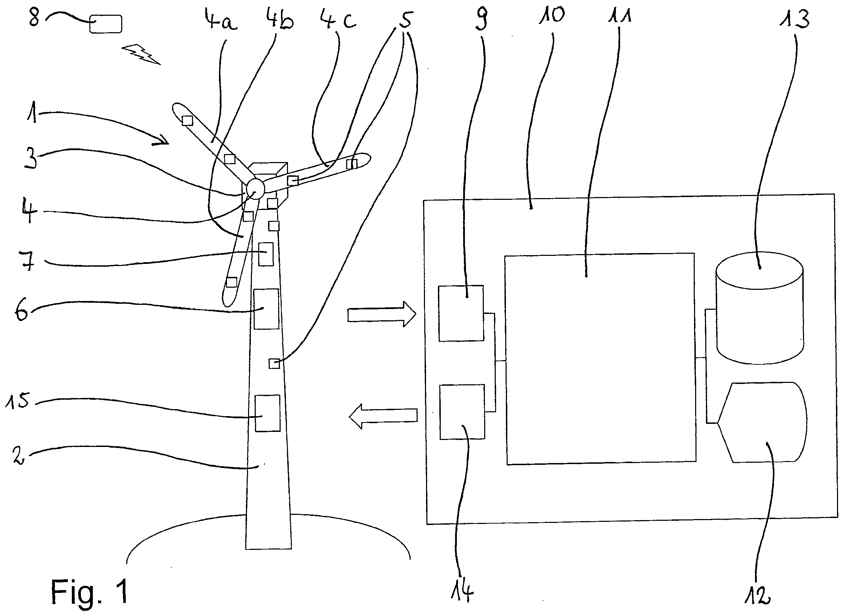

Fig. 1 zeigt ein System zum Überwachen von Bewegungen einer als Struktur dienenden Windenergieanlage 1.

Die Windenergieanlage 1 weist einen auf einem Untergrund errichteten Turm 2 auf, an dem eine Gondel 3 mit einem daran vorgesehenen Rotor 4 mit Rotorblättern 4a, 4b und 4c angeordnet ist. An der Windenergieanlage 1 bzw. ihren Komponenten 2, 3, 4, 4a, 4b und 4c sind jeweils eine bzw. mehrere inertiale Messvorrichtungen 5 angeordnet. Diese sind in der Zeichnung durch kleine Kästchen dargestellt und aus Gründen der Deutlichkeit nicht einzeln mit Bezugszeichen bezeichnet.

Die inertialen Messvorrichtungen 5 weisen jeweils drei Drehratensensoren mit voneinander linear unabhängigen und/oder zueinander orthogonalen Erfassungsachsen sowie drei Beschleunigungssensoren mit jeweils voneinander linear unabhängigen und/oder zueinander orthogonalen Erfassungsrichtungen auf. Ihr Ausgangssignal kann verwendet werden, um mit Hilfe eines beispielsweise aus der Fahrzeug-, Schiffs- oder Flugnavigation bekannten Navigationsalgorithmus eine Berechnung von Winkelgeschwindigkeiten und Geschwindigkeiten bzw. Orientierungen und Positionen der jeweiligen inertialen Messvorrichtungen 5 im erdfesten Inertialsystem zu bestimmen.

Als Grundlage für derartige Berechnungen sammelt eine Sendeeinheit 6 die von den inertialen Messvorrichtungen 5 gemessenen Werte, sowie gegebenenfalls von einer weiteren Sensoreinheit 7 gemessene Umweltparameter und Statusinformationen der Windenergieanlage. Die Umweltparameter können sich beispielsweise auf eine Windrichtung, eine Windstärke, eine Temperatur, eine Wellenrichtung und/oder Wellenstärke (z.B. bei Offshore-Anlagen) beziehen. Die Statusinformationen können einen Status der Windenergieanlage, umfassend beispielsweise eine Ausrichtung der Gondel 3, einen Drehwinkel des Rotors 4, einen Pitch bzw. eine Durchbiegung der Rotorblätter 4a, 4b, 4c und eine Leistungsabgabe der erzeugten Energie betreffen. Weiterhin kann die Statusinformation auch ein beispielsweise von einem Satelliten 8 empfangenes Positionssignal umfassen, welches von der Sensoreinheit 7 erfasst und an die Sendeeinheit 6 übermittelt werden kann.

Die gesammelten Daten können von der Sendeeinheit 6 beispielsweise mittels drahtloser oder kabelgebundener Kommunikation an einen Empfänger 9 einer Überwachungsvorrichtung 10 gesendet werden. Die Überwachungsvorrichtung 10 kann sich lokal in einer Umgebung der Windenergieanlage 1, aber auch entfernt von der Windenergieanlage 1 befinden. Eine lokale Anordnung der Überwachungsvorrichtung 10 kann auch eine Anordnung innerhalb oder an der Windenergieanlage 1 oder eine Anordnung in einer nahen Umgebung bedeuten. Beispielsweise kann die Überwachungsvorrichtung 10 in einer Überwachungs- und Steuerungszentrale eines Windparks angeordnet sein, in der die Windenergieanlage 1 aufgestellt ist. Eine Anordnung entfernt von der Windenergieanlage 1 ist beispielsweise bei Offshore-Windenergieanlagen sinnvoll.

Die Überwachungsvorrichtung 10 kann eine Zentraleinheit 11 zum Bestimmen des Überwachungswerts auf Basis der übermittelten Daten, insbesondere auf Basis der von den inertialen Messvorrichtungen 5 gemessenen Drehraten und Beschleunigungswerte aufweisen. Beispielsweise kann die Zentraleinheit 11 einen klassischen Navigationsalgorithmus mit Schuler-Kompensation durchführen.

Dadurch kann für jede der inertialen Messvorrichtungen eine Winkelgeschwindigkeit und Geschwindigkeit einer Bewegung und eine Position und Orientierung im Raum bestimmt werden. Weiterhin können Relativbewegungen der inertialen Messvorrichtungen zueinander bestimmt und ausgewertet werden. Auf dieser Basis kann ein Überwachungswert bestimmt werden, beispielsweise ein Pitch eines Rotorblatts 4c oder eine Torsion des Turms 2 durch Windlast.

Der Überwachungswert kann an eine Ausgabeeinheit 12 gesendet werden, die den Überwachungswert beispielsweise einem Bedienpersonal zugänglich macht bzw. anzeigt. Alternativ kann der Überwachungswert auch in einem Speicher 13 erfasst und zu Dokumentationszwecken gespeichert werden.

Bei der Verwendung klassischer Navigationsalgorithmen zur Überwachung der Bewegung von Strukturen besteht die Möglichkeit, Voraussetzungen und Bedingungen, die sich aus körperlichen Eigenschaften der Struktur ergeben, in den Navigationsalgorithmus und insbesondere in eine Fehlerabschätzung bzw. Fehlerkorrektur mit einzubeziehen.

Insbesondere sind den Messwerten der inertialen Messvorrichtungen 5 typischerweise Fehler überlagert, die beispielsweise auf einen Nullpunktfehler bzw. Skalenfaktorfehler der enthaltenen Beschleunigungs- und Drehratensensoren zurückzuführen ist. Bei einer Bestimmung der Richtungs- und Winkelgeschwindigkeiten bzw. der Position und der Orientierung werden die Fehler aufintegriert und führen zu einer fortlaufenden Drift.

Bei der Überwachung von Strukturen können räumliche Gegebenheiten der Struktur als Randbedingungen des Navigationsalgorithmus betrachtet und im Rahmen der Fehlerkorrektur beispielsweise mittels eines Kalman-Filters berücksichtigt werden. Derartige Randbedingungen sind beispielsweise eine (geographische) Position der Struktur, die bei Gebäuden oder auf fester Gründung errichteten Anlagen im Allgemeinen fest ist. Bei Offshore-Anlagen kann die Position beispielsweise durch ein satellitengestütztes Positionssignal (GPS) ermittelt werden. Weitere Randbedingungen können, wie vorstehend beschrieben, auch aus Umweltinformationen bestimmt oder mittels weiterer Sensoren, beispielsweise eines Turmneigungssensors, ermittelt werden.

Die Randbedingungen ermöglichen es, die systematischen Fehler der Messwerte der inertialen Messvorrichtungen abzuschätzen und zu korrigieren. Dadurch wird eine genaue Positions- und Orientierungsbestimmung möglich, die eine geeignete Basis zur Bestimmung des Überwachungswerts liefert. Weitere Randbedingungen, die zu einer Verbesserung der Fehlerabschätzung und Fehlerkorrektur führen können, sind bereits oben im allgemeinen Teil beschrieben und können in der in Fig. 1 gezeigten Ausführungsform genutzt werden.

Weiterhin kann die Zentraleinheit 11 der Überwachungsvorrichtung 10 dazu ausgelegt sein, Grenzwerte des Überwachungswerts zu erfassen und bei Überschreiten wenigstens eines der Grenzwerte eine Information an die Ausgabeeinheit 12 zu senden. Die Vorgabe von Grenzwerten ermöglicht die Erkennung und Meldung von drohenden Schäden sowie von Wartungs- und Regelungsbedarf.

Die Zentraleinheit 11 kann auf Basis des Überwachungswerts auch einen Vorschlag für Stellgrößen zum Einstellen von Aktoren an der Windenergieanlage 1 vorschlagen. Derartige Vorschläge können dem Bedienpersonal beispielsweise an der Ausgabeeinheit 12 angezeigt werden. Sie können beispielsweise ein Ausrichten der Gondel 3 gemäß einer erkannten Windrichtung, ein Ausrichten der Rotorblätter im Hinblick auf eine zu erzeugende Leistung und/oder ein Herunterfahren der Windenergieanlage beispielsweise bei drohenden Schäden oder im Schadensfall beinhalten.

Weiterhin kann die Zentraleinheit 11 die Stellgrößen über eine Sendeeinheit 14 an eine Empfangseinheit 15 der Windenergieanlage 1 übermitteln. In der Windenergieanlage 1 können die empfangenen Stellgrößen dazu verwendet werden, Aktoren der Windenergieanlage entsprechend zu steuern und beispielsweise ein Drehen der Gondel 3 oder ein Ausrichten der Rotorblätter 4a, 4b, 4c einzuleiten.

Weiterhin kann die Zentraleinheit 11 den Überwachungswert beispielsweise auf Basis eines Rechenmodells bestimmen, das ein dynamisches Verhalten der Windenergieanlage 1 berechnen und beispielsweise im Speicher 13 abgelegt sein kann. Die von den inertialen Messvorrichtungen 5 gemessenen Drehraten und Beschleunigungen bzw. die daraus ermittelten Geschwindigkeiten, Winkelgeschwindigkeiten, Positionen und Orientierungen können in das Rechenmodell eingespeist werden, welches auf dieser Basis das dynamische Verhalten der Windenergieanlage berechnet, simuliert bzw. dynamisch abbildet.

Auch die von der Sensoreinheit 7 gemessenen und von der Sendeeinheit 6 übermittelten weiteren Daten wie Umweltparameter und Statusinformationen können zur Stimulierung des Modells verwendet werden.

Das berechnete dynamische Verhalten kann vor dem Hintergrund weiterer Messwerte der inertialen Messvorrichtungen 5 bzw. weiterer Statusinformationen geprüft und bewertet werden, so dass diese Werte gleichzeitig eine Stimulierung und eine Stützung des Rechenmodells ermöglichen.

Das Rechenmodell kann beispielsweise verwendet werden, um Bewegungen mit höheren Moden der Windenergieanlage 1, wie beispielsweise Torsionen des Turms 2 oder Durchbiegungen der Rotorblätter 4a, 4b, 4c zu erfassen und zu bewerten.

Ein Detaillierungsgrad der Berechnungsschritte des Rechenmodells kann im Hinblick auf die benötigte Rechengenauigkeit und die verfügbar Rechenleistung bestimmt werden. Soweit die Überwachungsvorrichtung 10 und insbesondere die Zentraleinheit 11 über ausreichende Rechenkapazität verfügt, kann die Berechnung und Bewertung im Wesentlichen unter Echtzeitbedingungen bzw. mit nur geringer Verzögerung erfolgen.

Im operationellen Betrieb kann das System zur Überwachung der Windenergieanlage bzw. das darin umgesetzte Überwachungsverfahren als Condition Monitoring System genutzt werden, indem die ermittelten Bewegungen, Schwingungen, Frequenzen und/oder Amplituden mit vorgegebenen Grenzwerten verglichen werden. Im Rahmen des Condition Monitoring können beim Überschreiten der Grenzwerte Warnungen ausgegeben werden.

Weiterhin können die Mess- und Berechnungswerte auch als Regelgrößen betrachtet werden, um ein optimales Einstellen der Windenergieanlage 1 einerseits im Hinblick auf die einwirkenden Kräfte und andererseits im Hinblick auf die abzugebende Leistung zu ermöglichen. Dies ermöglicht eine gute Auslastung in gleichzeitig materialschonendem Betrieb.

Eine Auswertung von Lastwechseln und unterschiedlichen Belastungen über einen längeren Zeitraum ermöglicht die Bestimmung einer Restlebensdauer der Windenergieanlage 1 bzw. ihrer Komponenten, und/oder die Planung von Wartungsmaßnahmen.

Wie oben bereits beschrieben, können die Mess- und Berechungswerte auch bei der Entwicklung und Erprobung von Anlagen sowie bei ihrer Inbetriebnahme verwendet werden, beispielsweise um übermäßige Belastungen oder Unwuchten zu erkennen und zu korrigieren.

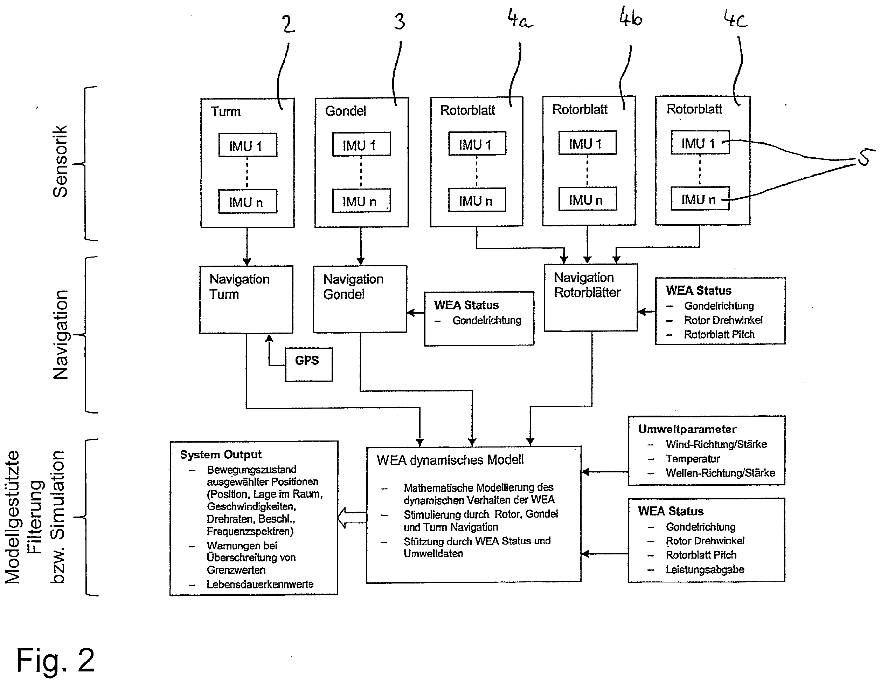

Fig. 2 zeigt ein Blockdiagramm einer Ausführungsform eines Überwachungssystems, beispielsweise des Überwachungssystems aus Fig. 1.

Im oberen Abschnitt sind die Sensoren und ihre Anordnung beschrieben. Dementsprechend weisen der Turm 2, die Gondel 3 und die Rotorblätter 4a, 4b, 4c jeweils n inertiale Messvorrichtungen (IMU - intertial measurement unit) auf, die jeweils an verschiedenen Positionen der jeweiligen Komponente befestigt sind.

Die inertialen Messvorrichtungen 5 senden ihre Daten an im mittleren Bereich der Fig. 2 dargestellte Navigationseinheiten der jeweiligen Komponenten, in denen die Navigationsberechnungen auf Basis des Navigationsalgorithmus durchgeführt werden. Hier können beispielsweise die Geschwindigkeiten, Winkelgeschwindigkeiten, Positionen und Orientierungen der inertialen Messvorrichtungen bestimmt werden. Gestützt wird die Navigation jeweils durch geeignete Zusatzdaten bzw. Randbedingungen der Struktur, beispielsweise durch ein GPS-Signal, eine Gondelausrichtung, einen Drehwinkel des Rotors und/oder einen Pitch der Rotorblätter. Diese Informationen können, wie vorstehend beschrieben, beispielsweise zur Fehlerabschätzung, Fehlerkorrektur und/oder Sensorkalibrierung verwendet werden.

Im unteren Bereich der Fig. 2 ist die modellgestützte Filterung der Daten dargestellt, in die die Ergebnisse der Navigationsberechnungen sowie weitere Umweltparameter (Windrichtung, Windstärke, Temperatur, Wellenrichtung, Wellenstärke) und Statusinformationen (Gondelrichtung, Rotordrehwinkel, Rotorblattpitch, Leistungsabgabe) der Windenergieanlage 1 mit eingespeist werden. Die Daten können dabei kontinuierlich und im Wesentlichen in Echtzeit verarbeitet werden. Die modellgestützte Filterung kann folglich einer Simulation entsprechen, die eine modellunterstützte Auswertung der Daten "on-line", also ohne Zeitverzug, beispielsweise entsprechend möglicherweise vorgegebenen Echtzeit-Anforderungen ermöglicht.

Im Rahmen der modellgestützte Filterung wird ein Rechenmodell der Windenergieanlage genutzt, um das dynamische Verhalten der Windenergieanlage 1 zu berechnen. Wie vorstehend beschrieben, können die Navigationsdaten das Modell stimulieren, stützen und validieren. Als Ausgabe liefert die modellgestützte Filterung Informationen beispielsweise zum Bewegungszustand ausgewählter Positionen, Warnungen bei einer Überschreitung vordefinierter Grenzwerte und/oder Lebensdauerkennwerte. Diese Ergebnisse können beispielsweise an die Ausgabeeinheit 12 gesendet werden, um sie für das Bedienpersonal zugänglich zu machen, und zwar im Rahmen des Condition Monitorings, der Wartungsplanung und/oder im Rahmen einer aktiven Regelung der Windenergieanlage 1.

Demzufolge kann der Einsatz von inertialen Messsystemen und klassischen Navigationsalgorithmen im Bereich der Gebäude- und Anlagenüberwachung ein effektives Überwachen und Regeln der jeweiligen Struktur ermöglichen. Die für derartige Gebäude und Anlage geltenden Randbedingungen können dazu verwendet werden, die typischerweise im Rahmen der inertialen Navigation auftretenden Fehler (Nullpunkt und Skalenfaktorfehler) abzuschätzen und zu kompensieren. Auf dieser Basis kann ein einerseits effektiver, andererseits anlagenschonender Betrieb beispielsweise von Windenergieanlagen und eine kostenoptimierte Wartungsplanung erreicht werden.

## Patentansprüche

1. System zum Überwachen von Bewegungen einer ortsfesten Struktur (1) mit
- wenigstens einer an der Struktur befestigten inertialen Messvorrichtung (5) zum Bestimmen von Drehraten und Beschleunigungswerten in einem erdfesten Bezugssystem,
- einer Zentraleinheit (11) zum Bestimmen eines Überwachungswerts auf Basis der Drehraten und Beschleunigungswerte mittels eines Inertial-Navigationsalgorithmus, und
- einer Ausgabeeinheit (12) zum Ausgeben des Überwachungswerts, wobei die Zentraleinheit (11) dazu ausgelegt ist, einen Messfehler der inertialen Messvorrichtung (5) auf Basis einer durch die Struktur vorgegebenen Randbedingung zu bestimmen und/ oder zu korrigieren und so den Navigationsalgorithmus zu stützen, und
- die Zentraleinheit (11) dazu ausgelegt ist, die Randbedingung zu bestimmen auf Basis wenigstens einer Information aus einer Gruppe umfassend
+ eine im Wesentlichen stationäre Position der Struktur (1),
+ eine Einschränkung eines Freiheitsgrades einer Bewegung wenigstens eines Teils der Struktur (1),
+ einen Neigungswinkel wenigstens eines Teils der Struktur (1),
+ einen Mittelwert einer Bewegung wenigstens eines Teils der Struktur (1) und/oder der inertialen Messvorrichtung (5).

2. System nach Anspruch 1, wobei
- die inertiale Messvorrichtung (5) drei Drehratensensoren mit jeweils voneinander linear unabhängigen und/oder zueinander orthogonalen Erfassungsachsen sowie drei Beschleunigungssensoren mit jeweils voneinander linear unabhängigen und/oder zueinander orthogonalen Erfassungsrichtungen aufweist.

3. System nach einem der vorstehenden Ansprüche, mit
- mehreren an der Struktur befestigten inertialen Messvorrichtungen (5), wobei
- die Zentraleinheit (11) dazu ausgelegt ist, den Überwachungswert auf Basis einer Relativbewegung zwischen wenigstens jeweils zwei der mehreren inertialen Messvorrichtungen (5) zu bestimmen.

4. System nach einem der vorstehenden Ansprüche, wobei
- die Struktur (1) mehrere miteinander gekoppelte Komponenten (2, 3, 4, 4a, 4b, 4c) umfasst, und wobei
- an wenigstens zwei der Komponenten (2, 3, 4, 4a, 4b, 4c) jeweils eine inertiale Messvorrichtung angeordnet ist.

5. System nach einem der vorstehenden Ansprüche, wobei
- die Struktur eine Windenergieanlage (1) ist und die inertiale Messvorrichtung (5) an einem Rotorblatt (4a, 4b, 4c) der Windenergieanlage (1) angeordnet ist, wobei
- die inertiale Messvorrichtung (5) derart angeordnet ist, dass eine Tangente eines Rotationspfads der inertialen Messvorrichtung (5) zu keiner der Erfassungsrichtungen der Drehratensensoren senkrecht und/oder parallel ist, und/oder
- die Zentraleinheit (11) dazu ausgelegt ist, die Randbedingung zu bestimmen auf Basis wenigstens einer Information aus der Gruppe umfassend
+ die zyklisch mit einer Umdrehung des Rotors (4) auf die inertiale Messvorrichtung (5) einwirkende Erdbeschleunigung,
+ die zyklisch mit einer Umdrehung des Rotors (4) auf die inertiale Messvorrichtung (5) einwirkende Erdrotation, und
+ ein Ausgangssignal eines Drehpulsgebers des Rotors (4).

6. System nach einem der vorstehenden Ansprüche, wobei
- die Struktur eine Windenergieanlage (1) ist und die inertiale Messvorrichtung an einer Gondel (3) der Windenergieanlage (3) angeordnet ist, und
- die Zentraleinheit (11) dazu ausgelegt ist, die Randbedingung auf Basis eines Drehwinkelgebers der Gondel (3) zu bestimmen.

7. System nach einem der vorstehenden Ansprüche, wobei
- die Zentraleinheit (11) dazu ausgelegt ist, den Überwachungswert zu bestimmen auf Basis wenigstens einer Information aus der Gruppe umfassend
+ einen Ausgabewert eines Rechenmodells der Struktur (1),
+ eine Statusinformation der Struktur (1),
+ einen Umgebungsparameter,
+ eine Drehrate, eine Beschleunigung, eine Winkelgeschwindigkeit, eine Geschwindigkeit, eine Orientierung und/oder eine Position an einem von einem Einbauort der inertialen Messeinheit (5) verschiedenen Punkt der Struktur,
+ eine Torsion zwischen zwei verschiedenen Punkten der Struktur, und
+ eine Bewegungsamplitude und/oder eine Bewegungsfrequenz einer Schwingung der Struktur.

8. System nach einem der vorstehenden Ansprüche, wobei
- die Zentraleinheit (11) dazu ausgelegt ist,
+ Grenzwerte des Überwachungswerts zu erfassen und bei Überschreiten wenigstens eines der Grenzwerte eine Information an die Ausgabeeinheit (12) zu senden,
+ auf Basis des Überwachungswerts einen Vorschlag für Stellgrößen zum Einstellen von Aktoren der Struktur (1) an die Ausgabeeinheit (12) zu senden, und/oder
+ auf Basis des Überwachungswerts die Stellgrößen an die Aktoren zu senden.

9. Verfahren zum Überwachen von Bewegungen einer ortsfesten Struktur (1) mit
- Bestimmen von Drehraten und Beschleunigungswerten in einem erdfesten Bezugssystem von wenigstens einer an der Struktur (1) befestigten inertialen Messvorrichtung (5),
- Bestimmen eines Überwachungswerts auf Basis der Drehraten und Beschleunigungswerte mittels eines Intertial-Navigationsalgorithmus,
- Bestimmen und/oder Korrigieren eines Messfehlers der erfassten Drehraten und Beschleunigungswerte auf Basis einer durch die Struktur (1) vorgegebenen Randbedingung,
- Ausgeben des Überwachungswerts, wobei
ein Messfehler der inertialen Messvorrichtung (5) auf Basis einer durch die Struktur vorgegebenen Randbedingung bestimmt und/oder korrigiert und somit der Navigationsalgorithmus gestützt wird, und
- die Randbedingung auf Basis wenigstens einer Information aus einer Gruppe umfassend
+ eine im Wesentlichen stationäre Position der Struktur (1),
+ eine Einschränkung eines Freiheitsgrades einer Bewegung wenigstens eines Teils der Struktur (1),
+ einen Neigungswinkel wenigstens eines Teils der Struktur (1),
+ einen Mittelwert einer Bewegung wenigstens eines Teils der Struktur (1) und/oder der inertialen Messvorrichtung (5)
bestimmt wird.

10. Verfahren nach Anspruch 9, mit
- Einspeisen der Drehraten und Beschleunigungswerte in ein Rechenmodell der Struktur,
- Validieren des Rechenmodells anhand eines Vergleichs des Verlaufs der gemessenen Drehraten und Beschleunigungswerte jeweils mit in dem Modell berechneten Drehraten und Beschleunigungswerten, und
- Bestimmen des Überwachungswerts auf Basis des Rechenmodells.

11. Verfahren nach Anspruch 9 oder 10, wobei
die Struktur wenigstens einen Teil einer Windenergieanlage (1) umfassend einen Rotor (4) mit Rotorblättern (4a, 4b, 4c) aufweist, und wobei die inertiale Messvorrichtung (5) an einem der Rotorblätter (4a, 4b, 4c) angeordnet ist, mit
- Kalibrieren der inertialen Messvorrichtung (5) auf Basis einer zyklisch mit einer Umdrehung des Rotors (4) auf die inertiale Messvorrichtung (5) einwirkenden Erdbeschleunigung, auf Basis einer zyklisch mit einer Umdrehung des Rotors (4) auf die inertiale Messvorrichtung (5) einwirkenden Erdrotation und/oder auf Basis eines Drehpulsgebers des Rotors (4).

12. Verfahren nach einem der Ansprüche 9 bis 11, wobei
die Struktur wenigstens einen Teil einer Windenergieanlage (1) umfassend einen Rotor (4) aufweist, und wobei die inertiale Messvorrichtung (4) an dem Rotor (4) angeordnet ist, mit
- Erkennen einer Unwucht des Rotors (4) auf Basis der erfassten Drehraten und Beschleunigungswerte.

## Claims

1. System for monitoring of movements of a stationary structure (1) comprising:
- at least one inertial measurement device (5) mounted to the structure for determining of rotation rates and acceleration values in a earth fixed reference system,
- a central unit (11) for determining a monitoring value on the basis of the rotation rates and acceleration values by means of an inertial navigation algorithm, and
- an output unit (12) for outputting of the monitoring value, wherein
the central unit (11) is configured to determine and/or correct a measurement error of the inertial measurement device (5) on the basis of a boundary condition predetermined by the structure in order to support the navigation algorithm, and
- the central unit (11) is configured to determine the boundary conditions on the basis of at least one information of a group comprising
+ a substantially stationary position of the structure (1),
+ a constraint of a degree of freedom of a movement of at least a part of the structure (1),
+ an inclination angle of at least a part of the structure (1),
+ a mean value of a movement of at least a part of the structure (1) and/or of the inertial measurement device (5).

2. System according to claim 1, wherein
- the inertial measurement device (5) comprises three rotation rate sensors having detection axes that are each linearly independent of each other and/or orthogonal to each other as well as three acceleration sensors having detecting directions that are each linearly independent from each other and/or orthogonal to each other.

3. System according to one of the preceding claims, having
- several inertial measurement devices (5) mounted to the structure, wherein
- the central unit (11) is configured to determine the monitoring value on the basis of a relative movement between at least any two of the several inertial measurement devices (5).

4. System according to one of the preceding claims, wherein
- the structure (1) comprises several components (2, 3, 4, 4a, 4b, 4c) that are coupled to each other, and wherein
- one inertial measurement device is mounted on at least two of the components (2, 3, 4, 4a, 4b, 4c), respectively.

5. System according to one of the preceding claims, wherein
- the structure is a wind turbine (1) and the inertial measurement device (5) is arranged on a rotor blade (4a, 4b, 4c) of the wind turbine (1), wherein
- the inertial measurement device (5) is arranged such that a tangent of a path of rotation of the inertial measurement device (5) is not perpendicular and/or parallel to any of the detecting directions of the rotation rate sensors, and/or
- the central unit (11) is configured to determine the boundary conditions on the basis of at least one information of the group comprising
+ gravity acceleration acting cyclically during a revolution of the rotor (4) onto the inertial measurement device (5),
+ the rotation of the earth acting cyclically during a revolution of the rotor (4) onto the inertial measurement device (5), and
+ an output signal of a rotary pulse generator of the rotor (4).

6. System according to one of the preceding claims, wherein
- the structure is a wind turbine (1) and the inertial measurement device is arranged on a housing (3) of the wind turbine (1), and
- the central unit (11) is configured to determine the boundary condition on the basis of a rotary encoder of the housing (3).

7. System according to one of the preceding claims, wherein
- the central unit (11) is configured to determine the monitoring value on the basis of at least one information of the group comprising
+ an output value of a mathematical model of the structure (1),
+ a status information of the structure (1),
+ an environmental parameter,
+ a rotation rate, an acceleration, an angular velocity, a velocity, an orientation, and/or a position of a location of the structure different from an installation location of the inertial measurement device (5),
+ a torsion between two different locations of the structure, and
+ an amplitude and/or frequency of movement of an oscillation of the structure.

8. System according to one of the preceding claims, wherein
- the central unit (11) is configured to
+ capture threshold values of the monitoring value and to send information to the output unit (12), if at least one of the threshold values is exceeded,
+ send on the basis of the monitoring value a proposal for actuating variables for adjusting of actuators of the structure (1) to the output unit (12), and/or
+ send on the basis of the monitoring value the actuation variables to the actuators.

9. Method for monitoring of movements of a stationary structure (1) comprising:
- determining of rotation rates and acceleration values in an earth fixed reference system of at least one inertial measurement device (5) mounted to the structure (1),
- determining of a monitoring value on the basis of the rotation rates and acceleration values by means of an inertial navigation algorithm,
- determining and/or correcting a measurement error of the determined rotation rates and acceleration values on the basis of a boundary condition predetermined by the structure (1)
- outputting of the monitoring value, wherein
a measurement error of the inertial measurement device (5) is determined and/or corrected on the basis of a boundary condition predetermined by the structure and thus the navigation algorithm is supported, and
the boundary condition is determined on the basis of at least one information of a group comprising
+ a substantially stationary position of the structure (1),
+ a constraint of a degree of freedom of a movement of at least a part of the structure (1),
+ an inclination angle of at least a part of the structure (1),
+ a mean value of a movement of at least a part of the structure (1) and/or of the inertial measurement device (5).

10. Method according to claim 9, comprising:
- inputting of rotation rates and acceleration values into a mathematical model of the structure,
- validating of the mathematical model based on a comparison of the evolution of the measured rotation rates and acceleration values with rotation rates and acceleration values, respectively, that are calculated with the model, and
- determining the monitoring value on the basis of the mathematical model.

11. Method according to claim 9 or 10, wherein
the structure comprises at least a part of a wind turbine (1) having a rotor (4) with rotor blades (4a, 4b, 4c), and wherein the inertial measurement device (5) is arranged on one of the rotor blades (4a, 4b, 4c), comprising:
- calibrating the inertial measurement device (5) on the basis of gravity acceleration that acts cyclically during a revolution of the rotor (4) onto the inertial measurement device (5), on the basis of the rotation of the earth that acts cyclically during a revolution of the rotor (4) onto the inertial measurement device (5), and/or on the basis of a rotary encoder of the rotor (4).

12. Method according to any one of claims 9 to 11, wherein
- the structure comprises at least a part of a wind turbine (1) having a rotor (4), and wherein the inertial measurement device (5) is arranged on the rotor (4), comprising
- detecting an imbalance of the rotor (4) on the basis of the detected rotation rates and acceleration values.

## Revendications

1. Système pour surveiller des mouvements d'une structure fixe (1), avec
- au moins un dispositif de mesure à inertie (5), fixé à la structure, pour définir des vitesses de rotation et des valeurs d'accélération dans un système de référence terrestre,
- une unité centrale (11) pour définir une valeur de surveillance sur la base des vitesses de rotation et valeurs d'accélération à l'aide d'un algorithme de navigation à inertie, et
- une unité de sortie (12) pour sortir la valeur de surveillance,
l'unité centrale (11) étant conçue pour définir et/ou corriger une erreur de mesure du dispositif de mesure à inertie (5) sur la base d'une condition marginale prédéfinie par la structure, et supporter ainsi l'algorithme de navigation, et
l'unité centrale (11) étant conçue pour définir la condition marginale sur la base d'au moins une information d'un groupe comprenant
+ une position globalement stationnaire de la structure (1),
+ une restriction d'un degré de liberté d'un mouvement d'une partie au moins de la structure (1),
+ un angle d'inclinaison d'une partie au moins de la structure (1),
+ une valeur moyenne d'un mouvement d'une partie au moins de la structure (1) et/ou du dispositif de mesure à inertie (5).

2. Système selon la revendication 1,
- le dispositif de mesure à inertie (5) comportant trois capteurs de vitesse de rotation avec des axes de détection indépendants linéairement les uns des autres et/ou orthogonaux les uns par rapport aux autres, et trois capteurs d'accélération avec des directions de détection indépendantes linéairement les unes des autres et/ou orthogonales les unes par rapport aux autres

3. Système selon l'une des revendications précédentes, avec
- plusieurs dispositifs de mesure à inertie (5) fixés à la structure,
- l'unité centrale (11) étant conçue pour définir la valeur de surveillance sur la base d'un mouvement relatif entre au moins deux des dispositifs de mesure à inertie (5).

4. Système selon l'une des revendications précédentes,
- la structure (1) comprenant plusieurs composants (2, 3, 4, 4a, 4b, 4c) couplés entre eux, et
- un dispositif de mesure à inertie étant disposé sur au moins deux des composants (2, 3, 4, 4a, 4b, 4c).

5. Système selon l'une des revendications précédentes,
- la structure étant une éolienne (1), et le dispositif de mesure à inertie (5) étant disposé sur une pale de rotor (4a, 4b, 4c) de l'éolienne (1),
- le dispositif de mesure à inertie (5) étant disposé de telle sorte qu'une tangente d'une trajectoire de rotation du dispositif de mesure à inertie (5) ne soit perpendiculaire et/ou parallèle à aucune des directions de détection des capteurs de vitesse de rotation, et/ou
- l'unité centrale (11) étant conçue pour définir la condition marginale sur la base d'au moins une information du groupe comprenant :
+ l'accélération due à la pesanteur qui agit cycliquement avec un tour du rotor (4) sur le dispositif de mesure à inertie (5),
+ la rotation de la terre qui agit cycliquement avec un tour du rotor (4) sur le dispositif de mesure à inertie (5), et
+ un signal de sortie d'un transmetteur de moment cinétique du rotor (4).

6. Système selon l'une des revendications précédentes,
- la structure étant une éolienne (1) et le dispositif de mesure à inertie étant disposé sur une nacelle (3) de l'éolienne (1), et
- l'unité centrale (11) étant conçue pour définir la condition marginale sur la base d'un transmetteur d'angle de rotation de la nacelle (3).

7. Système selon l'une des revendications précédentes,
- l'unité centrale (11) étant conçue pour définir la valeur de surveillance sur la base d'au moins une information du groupe comprenant
+ une valeur de sortie d'un modèle de calcul de la structure (1),
+ une information d'état de la structure (1),
+ un paramètre d'environnement,
+ une vitesse de rotation, une accélération, une vitesse angulaire, une vitesse, une orientation et/ou une position en un point de la structure qui est différent d'un endroit de montage de l'unité de mesure à inertie (5),
+ une torsion entre deux différents points de la structure, et
+ une amplitude de mouvement et/ou une fréquence de mouvement d'une vibration de la structure.

8. Système selon l'une des revendications précédentes,
- l'unité centrale (11) étant conçue pour
+ détecter des valeurs limites de la valeur de surveillance et envoyer une information à l'unité de sortie (12) en cas de dépassement de l'une des valeurs limites,
+ envoyer à l'unité de sortie (12), sur la base de la valeur de surveillance, une proposition pour des grandeurs de commande pour régler des actionneurs de la structure (1), et/ou
+ envoyer aux actionneurs les grandeurs de réglage, sur la base de la valeur de surveillance.

9. Procédé pour surveiller des mouvements d'une structure fixe (1), avec
- la définition de vitesses de rotation et de valeurs d'accélération dans un système de référence terrestre, par au moins un dispositif de mesure à inertie (5) fixé à la structure (1),
- la définition d'une valeur de surveillance sur la base des vitesses de rotation et valeurs d'accélération à l'aide d'un algorithme de navigation à inertie, et
- la définition et/ou la correction d'une erreur de mesure des vitesses de rotation et valeurs d'accélération détectées, sur la base d'une condition marginale prédéfinie par la structure (1),
- la sortie de la valeur de surveillance,
une erreur de mesure du dispositif de mesure à inertie (5) étant définie et/ou corrigée sur la base d'une condition marginale prédéfinie par la structure, et l'algorithme de navigation étant ainsi supporté, et
- la condition marginale étant définie sur la base d'au moins une information d'un groupe comprenant
+ une position globalement stationnaire de la structure (1),
+ une restriction d'un degré de liberté d'un mouvement d'une partie au moins de la structure (1),
+ un angle d'inclinaison d'une partie au moins de la structure (1),
+ une valeur moyenne d'un mouvement d'une partie au moins de la structure (1) et/ou du dispositif de mesure à inertie (5).

10. Procédé selon la revendication 9, avec
- l'entrée des vitesses de rotation et valeurs d'accélération dans un modèle de calcul de la structure,
- la validation du modèle de calcul à l'aide d'une comparaison de la courbe des vitesses de rotation et valeurs d'accélération mesurées, avec des vitesses de rotation et valeurs d'accélération calculées dans le modèle, et
- la définition de la valeur de surveillance sur la base du modèle de calcul.

11. Procédé selon la revendication 9 ou 10,
la structure comportant une partie au moins d'une éolienne (1) qui comprend un rotor (4) avec des pales (4a, 4b, 4c), et le dispositif de mesure à inertie (5) étant disposé sur l'une des pales (4a, 4b, 4c), avec
- l'étalonnage du dispositif de mesure à inertie (5) sur la base d'une accélération due à la pesanteur qui agit cycliquement avec un tour du rotor (4) sur le dispositif de mesure à inertie (5), sur la base d'une rotation de la terre qui agit cycliquement avec un tour du rotor (4) sur le dispositif de mesure à inertie (5), et/ou sur la base d'un transmetteur de moment cinétique du rotor (4).

12. Procédé selon l'une des revendications 9 à 11,
la structure comportant une partie au moins d'une éolienne (1) qui comprend un rotor (4) avec des pales (4a, 4b, 4c), et le dispositif de mesure à inertie (5) étant disposé sur le rotor (4), avec
- l'identification d'un balourd du rotor (4) sur la base des vitesses de rotation et valeurs d'accélération détectées.
